# EUROPEAN PATENT APPLICATION

(11) **EP 2 116 395 A1**
(43) Date of publication of application: **11.11.2009**
(21) Application number: 07832485.2
(22) Date of filing: 26.11.2007
(51) Int. Cl.: B60C 9/18, B60C 9/20, B60C 11/00

(54) **PNEUMATIC TIRE FOR TWO-WHEELED VEHICLE**

(30) Priority: 20.12.2006 JP 2006342545
(71) Applicant: Bridgestone Corporation, Tokyo 104-8340 (JP)
(72) Inventor: TERADA, Kouji, Kodaira-shi Tokyo 187-8531 (JP)
(74) Representative: Whalley, Kevin
(86) International application number: PCT/JP2007/072760
(87) International publication number: WO 2008/075536

(57) **Abstract**

The present invention provides a pneumatic tire for a motorcycle, in which stability in running straight at a relatively high speed and gripping properties in cornering are improved in a compatible manner. The pneumatic tire for a motorcycle includes slant belt layers 16L, 16U disposed on the outer side in the tire radial direction of a carcass 14 and a "0 degree" belt layer 18 disposed on the outer side in the tire radial direction of the slant belt layers 16L, 16U. The first belt layer 16L as the innermost belt layer in the tire radial direction, of the slant belt layers 16L, 16U, is constituted of three divided portions including two rows of first belt layer side portions 16LA, 16LB disposed on respective side portions in the tire widthwise direction and one row of a first belt layer center portion 16LC disposed at the center portion in the tire widthwise direction. Cords of the first belt layer center portion 16LC are disposed at an angle in a range of 60 to 90 degrees with respect to the tire equatorial plane, and cords of the first belt layer side portions 16LA, 16LB are disposed at an angle in a range of 20 to 50 degrees with respect to the tire equatorial plane.

## Description

### Technical Field

The present invention relates to a pneumatic tire for a motorcycle, and in particular, to a pneumatic tire for a motorcycle suitable for use in a motorcycle of high emission, which runs fast.

### Prior Art

In recent years, there has been a tendency of making motorcycles increasingly faster.
Due to this, it has been necessitated to achieve better running stability in running at a relatively high speed. Further, it is becoming important that such a fast running motorcycle can run at a higher cornering speed in a circuit running or the like than before (see JP06024207A, JP07108805A, EP1072443, JP06127214A, JP08001122Y).

With regard to stability at a relatively high speed, it has been known that stability at a relatively high speed is significantly improved by providing a tire with a "0 degree" belt layer constituted of cords wound in the tire circumferential direction, i.e. a belt layer in which cords are disposed at an angle (cord angle) of substantially 0 degree with respect to the tire equatorial plane.

Further, it is known that, in order to improve gripping properties in cornering, provision of a "0-45 degrees" crossing belt layer, i.e. a cord-crossing belt layer in which the cord angle with respect to the tire circumferential direction is in a range of 0-45 degrees, is effective.

However, in a case in which a "0 degree" belt is disposed on the outer side in the tire radial direction of a crossing belt layer having cord angle in a range of 0-45 degrees, rigidity when the motorcycle stands upright is too high to ensure stability. Further, in such a case, there also arises a problem that riding comfort tends to deteriorate.

### Disclosure of the Invention

### Problems to be solved by the Invention

In view of the aforementioned facts, an object of the present invention is to provide a pneumatic tire for a motorcycle, which tire is capable of improving both stability in running straight at a relatively high speed and gripping properties in cornering at the same time.

### Means for solving the Problems

In a first aspect of the present invention, a pneumatic tire for a motorcycle, comprises: a carcass constituted of at least one carcass ply provided in a toroidal shape over a pair of bead cores; a dual layer slant belt constituted of two cord-crossing layers in which cords of respective layers cross each other, the slant belt being disposed on the outer side in the tire radial direction of the carcass; and a circumferential direction belt layer provided on the outer side in the tire radial direction of the slant belt layers and extending substantially in the tire circumferential direction, wherein a first belt layer as the innermost belt layer in the tire radial direction of the slant belt layers is constituted of three divided portions including one row of a first belt layer center portion disposed at the center portion in the tire widthwise direction and two rows of first belt layer side portions disposed on respective side portions in the tire widthwise direction, cords of the first belt layer center portion are disposed at an angle in a range of 60 to 90 degrees with respect to the tire equatorial plane, and cords of the first belt layer side portions are disposed at an angle in a range of 20 to 50 degrees with respect to the tire equatorial plane.

The angle formed by cords of the circumferential direction belt layer with respect to the tire equatorial plane (cord angle) is, in view of production tolerance, in a range of 0 to 5 degrees.
The circumferential direction belt layer can be formed, for example, by winding a belt-shaped rubber-coated cord ribbon, in which a single or plural juxtaposed cords are embedded in a coating rubber, on the tire at a winding angle in a range of 0 to 5 degrees with respect to the tire equatorial plane.

In order to ensure running stability during straight running, it is effective to provide a slant belt layer having a relatively large cord angle.
On the other hand, in order to improve gripping properties in cornering by the respective side portions in tire widthwise direction, it is effective to make the cord angle of the slant belt layer relatively small, to increase rigidity of the slant belt layer and thus enhance camber thrust.

Accordingly, in the tire of the first aspect of the present invention, the first belt layer of the slant belt layers is designed to have a divided structure as described above, such that the first belt layer center portion having a relatively large cord angle and the circumferential direction belt layer are disposed at the tire widthwise direction center portion which constitutes the vicinities of the tire equatorial plane and the first belt layer side portions each having a relatively small cord angle are disposed at the respective side portions in the tire widthwise direction.

Due to the structures as described above, good running stability in running straight at a relatively high speed is ensured by the tire center portion in the widthwise direction and good gripping properties in cornering are ensured by the respective tire side portions in the widthwise direction.
As a result, there can be provided a pneumatic tire for a motorcycle, in which stability in running straight at a relatively high speed and gripping properties in cornering are improved simultaneously.
Further, by structuring the tire widthwise direction center portion as described above, good riding comfort, i.e. good impact absorbing properties, is ensured, as well.

It is preferable that the width in the peripheral direction in a tire widthwise direction section of the first belt layer center portion is no narrower than 25% of the width in the peripheral direction of a tread portion, because otherwise the first belt layer center portion is too narrow in width and it is difficult to ensure stability in running straight at a relatively high speed.

In the present specification, the "width in the peripheral direction of the first belt layer center portion" represents the width in a substantially arcuate direction along the outer periphery of the first belt layer center portion, and the "width in the peripheral direction of a tread" represents the width in a substantially arcuate direction along the outer periphery of the tread.
It should be noted that, in the descriptions below, a "belt width" always represents a width along the peripheral direction, i.e. a "peripheral direction width".

Further, it is preferable that the distance in the peripheral direction between the tire center-side ends of the first belt layer side portions disposed on the respective sides in the tire widthwise direction, in a cross-section in the tire widthwise direction, is no larger than 75% of the peripheral direction width of a tread.
When the aforementioned distance is larger than 75% of the peripheral direction width of a tread, it becomes difficult to reliably attain good gripping properties in cornering.

In a second aspect of the present invention, rubbers of different types are disposed at the center portion and side portions of a tread, respectively, such that 300% modulus at 100 °C of the rubber at the center portion is higher than that of the rubber at the respective side portions of the tread.

Stability in running at a relatively high speed is enhanced by disposing tread rubber having relatively high modulus in the vicinity of the tire center portion. On the other hand, gripping properties in cornering is enhanced by disposing rubber having relatively low modulus at the respective sides in the tire widthwise direction. Accordingly, due to the second aspect of the present invention, both stability in running straight at a relatively high speed and gripping properties in cornering can be further improved.

In a third aspect of the present invention, the pneumatic tire for a motorcycle further comprises an outermost protection layer having substantially the same belt width as the slant belt layers, the outermost protection layer including an aramid cord extending at an angle in a range of 70° or greater with respect to the tire equatorial plane.

In the present specification, "substantially the same belt width as the slant belt layers" represents a belt width in a range of 85-15% of the belt width of the slant belt layers.

By covering the outermost layer of the belt layers with a belt layer having a relatively large cord angle, there is obtained an effect of alleviating stepwise difference in rigidity generated at the end portions of the slant belt layers constituted of divided portions.
Accordingly, due to the third aspect of the present invention, gripping properties in cornering can be further improved in an effective manner.

In a fourth aspect of the present invention, a second belt layer disposed on the tire radial direction outer side of the first belt layer, of the slant belt layers, is constituted of three divided portions including two rows of second belt layer side portions disposed on the respective side portions in the tire widthwise direction and one row of a second belt layer center portion disposed at the center portion in the tire widthwise direction, wherein cords of the second belt layer center portion are disposed at an angle in a range of 60 to 90 degrees with respect to the tire equatorial plane, cords of the second belt layer side portions are disposed at an angle in a range of 20 to 50 degrees with respect to the tire equatorial plane, such that the cords of the respective portions of the second belt layer cross the cords of the first belt layer.
As a result, stability in running straight at a relatively high speed can be further enhanced.

### Effect of the Invention

According to the present invention, there can be obtained a pneumatic tire for a motorcycle, in which stability in running straight at a relatively high speed and gripping properties in cornering are simultaneously improved in a compatible manner.

### Brief Description of the Drawings

Fig. 1 is a sectional view in the tire widthwise direction of a pneumatic tire for a motorcycle according to a first embodiment of the present invention.
Fig. 2 is a sectional view in the tire widthwise direction of a pneumatic tire for a motorcycle according to a second embodiment of the present invention.
Fig. 3 is a sectional view in the tire widthwise direction of a pneumatic tire for a motorcycle according to a third embodiment of the present invention.
Fig. 4 is a sectional view in the tire widthwise direction of a pneumatic tire for a motorcycle according to a fourth embodiment of the present invention.
Fig. 5 is a sectional view in the tire widthwise direction of a conventional pneumatic tire for a motorcycle.

### Explanation of Reference Numerals

- 10: Pneumatic tire for motorcycle
- 10C: Tire widthwise direction center portion
- 10SA: Tire widthwise direction side portion (one of tire widthwise direction respective side portions)
- 10SB: Tire widthwise direction side portion (one of tire widthwise direction respective side portions)
- 12: Bead core
- 14: Carcass
- 16L, 16U: Slant belt layer
- 16L: First belt layer
- 16U: Second belt layer
- 16LA: First belt layer side portion
- 16LB: First belt layer side portion
- 16LC: First belt layer center portion
- 18: "0 Degree" belt layer (circumferential direction belt layer)
- 22: Tread portion of the pneumatic tire for motorcycle
- 42: Tread portion
- 42C: Tread center portion (center portion)
- 42A: Tread side portion (one of respective side portions)
- 42B: Tread side portion (one of respective side portions)
- 50: Pneumatic tire for motorcycle
- 54: Outermost protection layer
- 60: Pneumatic tire for motorcycle
- 66U: Second belt layer
- 66UA: Second belt layer side portion
- 66UB: Second belt layer side portion
- 66UC: Second belt layer center portion
- 84: Carcass
- 88: "0 Degree" belt layer (circumferential direction belt layer)
- K1, K2: Slant belt

### Best Mode for carrying out the Invention

Hereinafter, an embodiment of the present invention will be described with reference to a tire for a motorcycle as an example of the embodiment.
It should be noted that, in a second and other subsequent embodiments, the same reference numerals are assigned to the components identical to those of the first embodiment and detailed explanation thereof will be omitted.

### <First Embodiment>

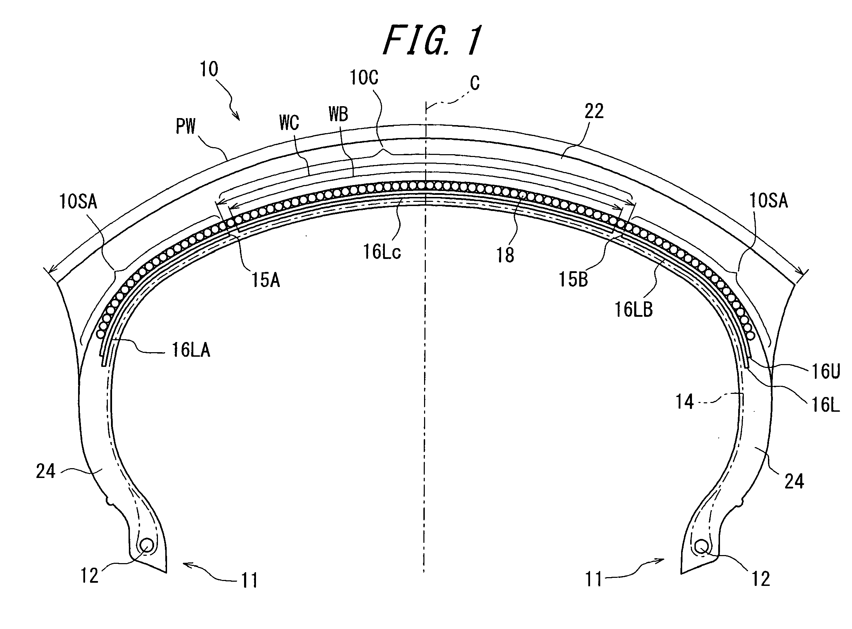

First, a first embodiment of the present invention will be described. As shown in Fig. 1, a pneumatic tire 10 for a motorcycle according to the present embodiment includes: a carcass 14 constituted of at least one carcass ply provided in a toroidal shape over respective bead cores 12 of a pair of bead portions 11; a dual layer slant belt 16L, 16U constituted of two cord-crossing layers disposed on the outer side in the tire radial direction of the carcass 14; and a "0-degree" belt layer 18 disposed on the outer side in the tire radial direction of the slant belt layers 16L, 16U.
When the "0 degree" belt layer 18 is formed, a belt-shaped and rubber-coated cord ribbon, in which plural juxtaposed cords are embedded in coating rubber, is wound in the tire circumferential direction and then the ribbon thus wound is vulcanization-molded.
Further, sidewall portions 24 are formed on the outer side of the tire between the bead portions 11 and the tread 22.

The dual layer slant belt 16L, 16U is constituted of a first belt layer 16L disposed on the inner side in the tire radial direction and a second belt layer 16U disposed in the outer side in the tire radial direction of the first belt layer 16L.
The first belt layer 16L is constituted of three divided portions including two rows of first belt layer side portions 16LA, 16LB disposed at respective side portions 10SA, 10SB in the tire widthwise direction and one row of a first belt layer center portion 16LC disposed at the center portion 10C in the tire widthwise direction. Cords of the first belt layer center portion 16LC are disposed at an angle in a range of 60 to 90 degrees with respect to the tire equatorial plane C, and cords of the first belt layer side portions 16LA, 16LB are disposed at an angle in a range of 20 to 50 degrees with respect to the tire equatorial plane C.

Due to the structure described above, the first belt layer center portion 16LC having a relatively large cord angle and the "0 degree" belt layer 18 are disposed at the tire widthwise direction center portion 10C which constitutes the vicinities of the tire equatorial plane, while the first belt layer side portions 16LA, 16LB having a relatively small cord angle and the "0 degree" belt layer 18 are disposed at the tire widthwise direction side portions 10SA, 10SBC. As a result, stability in running straight at a relatively high speed is ensured by the tire widthwise direction center portion 10C and gripping properties in cornering is ensured by the respective side portions in the tire widthwise direction.
Accordingly, there can be obtained a pneumatic tire 10 for a motorcycle, in which stability in running straight at a relatively high speed and gripping properties in cornering are improved in a compatible manner.
Further, by designing the tire widthwise direction center portion 10C as described above, good riding comfort (impact absorbing properties) is ensured.

Yet further, the peripheral direction width WB of the first belt layer center portion 16LC is set to be no smaller than 25% of the peripheral direction width PW of the tread 22, whereby stability in running straight at a relatively high speed can be sufficiently ensured. Further, the peripheral direction width WC of a region between the end 15A, on the tire center side, of the first belt layer side portion16LA and the end 15B, on the tire center side, of the first belt layer side portion 16LB is set to be no larger than 75% of the peripheral direction width PW of the tread portion 22, whereby good gripping properties in cornering is sufficiently ensured.

### <Second Embodiment>

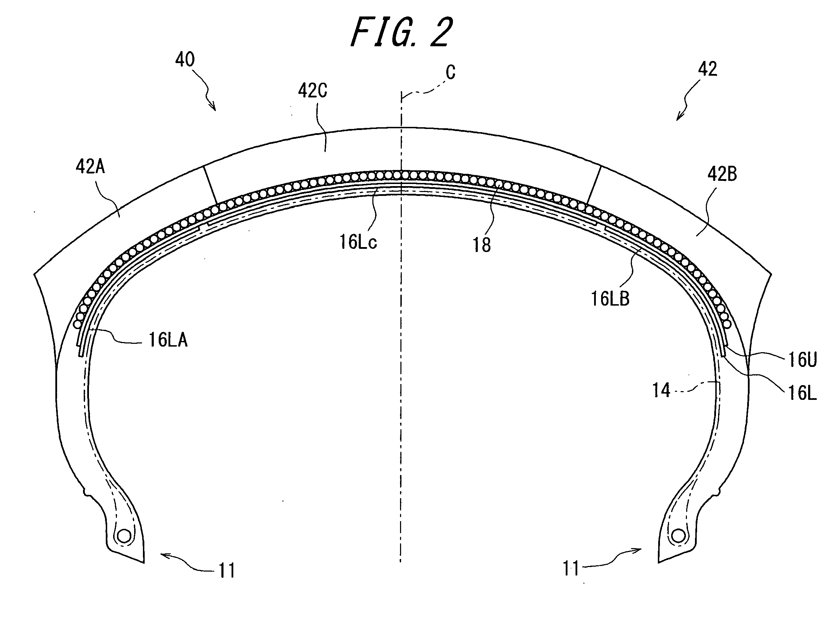

Next, a second embodiment of the present invention will be described.
As shown in fig. 2, in a pneumatic tire 40 for a motorcycle of the present invention, as compared with the tire 10 of the first embodiment, types of tread rubber in a tread portion 42 are differentiated between the tread center portion 42C and tread side portions 42A, 42B, respectively, such that 300% modulus at 100 °C of the rubber at the tread center portion 42C is higher than that of the rubber at the tread side portions 42A, 42B.

According to the structure described above, stability in running at a relatively high speed is enhanced because tread rubber having relatively high modulus is disposed at the tread center portion 42C. On the other hand, gripping properties in cornering are enhanced because rubber having relatively low modulus is disposed at the respective tread side portions 42A, 42B.
Accordingly, in the second embodiment, as compared with the first embodiment, there is obtained a pneumatic tire 40 for a motorcycle, in which both stability in running straight at a relatively high speed and gripping properties in cornering can be further improved.

### <Third Embodiment>

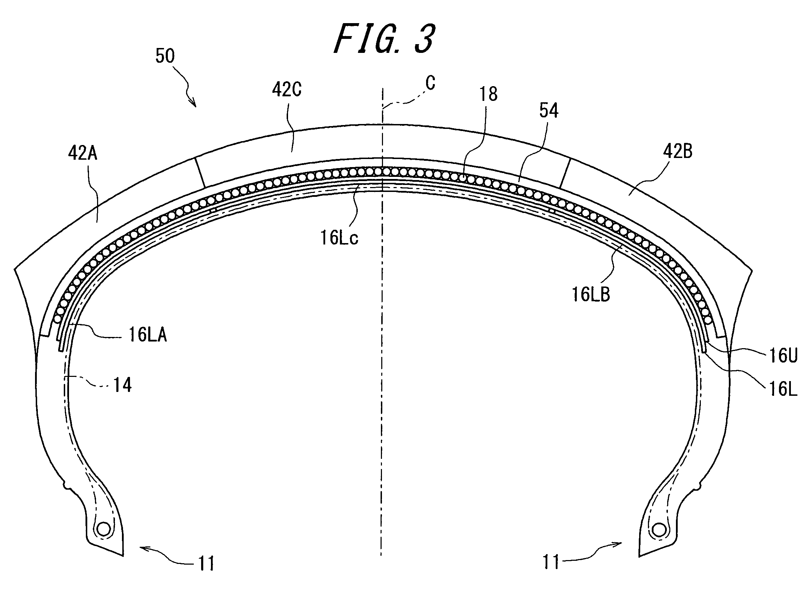

Next, a third embodiment of the present invention will be described.
As shown in Fig. 3, in a pneumatic tire 50 for a motorcycle of the present invention, as compared with the tire 40 of the second embodiment, an outermost protection layer 54 having substantially the same belt width as the slant belt layers 16L, 16U is further provided.
The outermost protection layer 54 includes aramid cords disposed at an angle in a range of 70° or greater with respect to the tire equatorial plane.

By constituting the outermost layer of the belt layers, of the outermost protection layer 54 having a relatively large cord angle, and covering the inner belt layers, i.e. the belt layers on the inner side in the tire radial direction of the outermost protection layer 54, with the outermost protection layer 54, stepwise difference in rigidity, generated at the end portions of the first belt layer 16L constituted of divided portions, can be alleviated.
Accordingly, in the third embodiment, as compared with the second embodiment, there is obtained a pneumatic tire 50 for a motorcycle, in which gripping properties in cornering are further improved.

### <Fourth Embodiment>

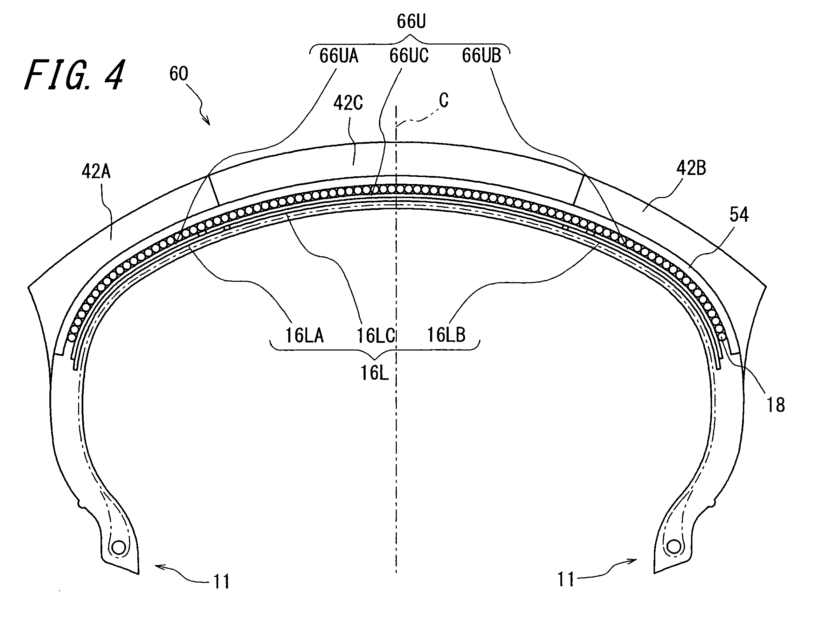

Next, a fourth embodiment of the present invention will be described.
As shown in Fig. 4, in a pneumatic tire 60 for a motorcycle of the present invention, as compared with the tire 50 of the third embodiment, a second belt layer 66U is provided instead of the second belt layer 16U.

The second belt layer 66U is constituted of three divided portions including two rows of second belt layer side portions 66UA, 66UB disposed on the respective side portions in the tire widthwise direction and one row of a second belt layer center portion 66UC disposed at the center portion in the tire widthwise direction. Cords of the second belt layer center portion 66UC are disposed at an angle in a range of 60 to 90 degrees with respect to the tire equatorial plane, cords of the second belt layer side portions 66UA, 66UB are disposed at an angle in a range of 20 to 50 degrees with respect to the tire equatorial plane, and the cords of the second belt layer side portions 66UA, 66UB cross the cords of the first belt layer side portions 16A, 16B, respectively.

In the fourth embodiment, the second belt layer 66U is constituted of three divided portions in a manner similar to that in the first belt layer 16L. As a result, stability in running straight at a relatively high speed can be further improved.

### <Examples>

To confirm the effects caused by the present invention, the inventors of the present invention prepared an example of the pneumatic tire 10 for a motorcycle according to the first embodiment (which will be referred to as "Example 1 tire" hereinafter), an example of the pneumatic tire 40 for a motorcycle according to the second embodiment (which will be referred to as "Example 2 tire" hereinafter), an example of the pneumatic tire 50 for a motorcycle according to the third embodiment (which will be referred to as "Example 3 tire" hereinafter), an example of the pneumatic tire 60 for a motorcycle according to the fourth embodiment (which will be referred to as "Example 4 tire" hereinafter), and two examples of a conventional pneumatic tire for a motorcycle (which will be referred to as "Conventional Example 1 tire" and "Conventional Example 2 tire" hereinafter), and carried out performance tests to evaluate performances of the tires.

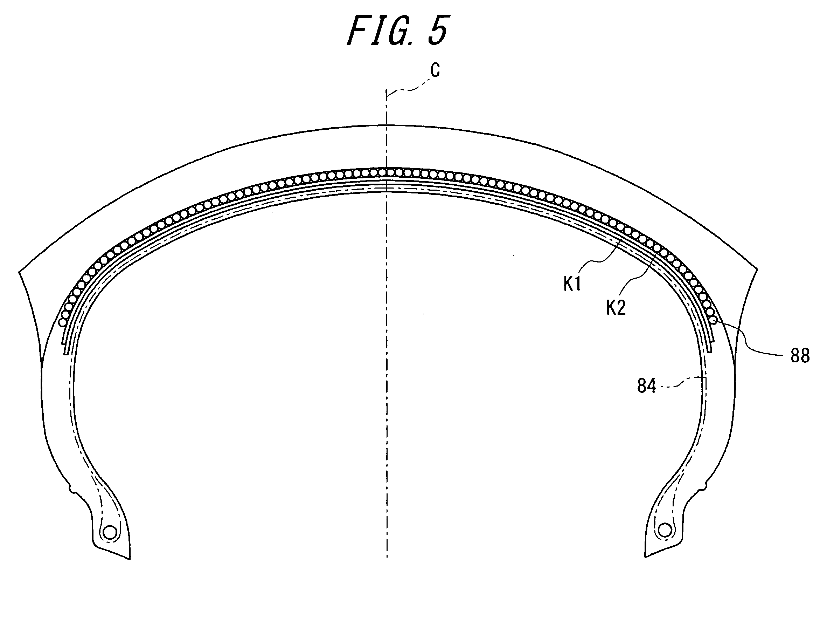

All of the tires thus prepared had the same size of 190/50ZR17M/C. In Conventional Example 1 tire and Conventional Example 2 tire, as shown in Fig. 5, a dual layer slant belt K1, K2 disposed on the outer side in the tire radial direction of the carcass 84 is constituted of two layers, i.e. a first belt layer K1 and a second belt layer K2 crossing each other and the first belt layer K1 positioned on the inner side in the tire radial direction is not divided. The 0 degree belt layer 88 disposed on the outer side in the tire radial direction of the slant belt layers K1, K2 is a belt layer similar to the 0 degree belt layer 18.

The tire conditions of the respective tires are shown in Table 1. With regard to modulus values of the tread rubber, the modulus of Conventional Example 1 tire is expressed as the reference index value of 100 and the modulus of each of other tires is expressed as a relative index value calculated with respect to the reference index value. Further, in Examples 1-4 tires, the cords of the first belt layer side portion 16LA and the cords of the first belt layer side portion 16LB are slanted in the same direction.

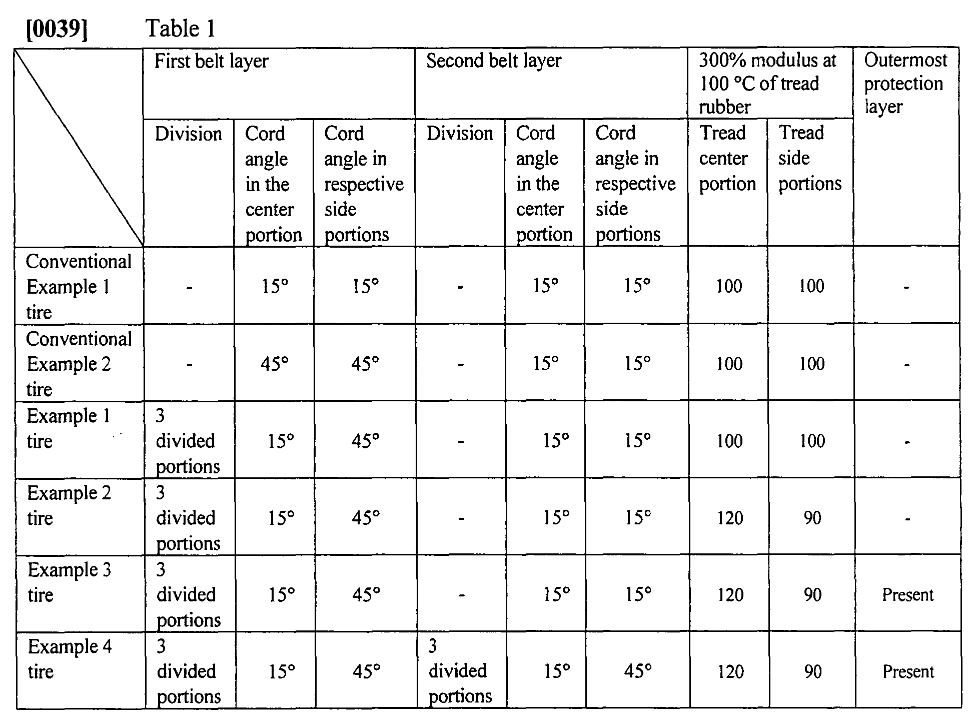

In testing the example tires, each of the tires was mounted, after being assembled with a standard rim, to a 1000 CC motorcycle of super sport type and the motorcycle was made to run in a circuit with the tire inner pressure of 250 kPa. In the present specification, a "standard rim" represents a standard rim in accordance with the application size prescribed in "Year Book" of 2006 version issued by JATMA.

In testing the example tires, each tire was evaluated with regard to stability in running straight at a relatively high speed, riding comfort in running straight at a relatively high speed, and gripping properties in cornering thereof on the basis of the driver's feeling, with 10 points being full score.
The evaluation results are shown in Table 2. In the evaluation results in Table 2, higher points represent better performance.

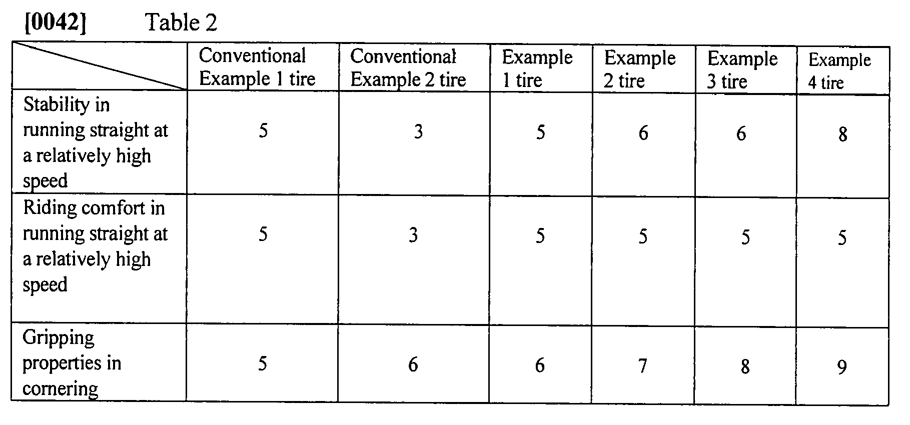

As is known from Table 2, Conventional Example 1 tire was better in stability and riding comfort in running straight at a relatively high speed but worse in gripping properties in cornering than Conventional Example 2 tire.
On the other hand, Conventional Example 2 tire was better in gripping properties in cornering but worse in stability and riding comfort in running straight at a relatively high speed than Conventional Example 1 tire.

Example 1 tire exhibited the same stability and riding comfort in running straight at a relatively high speed as those of Conventional Example 1 tire and the same gripping properties in cornering as those of Conventional Example 2. Accordingly, Example 1 tire was evaluated to be a tire which is excellent in all of stability and riding comfort in running straight at a relatively high speed and gripping properties in cornering.

Examples 2-4 tires were evaluated to exhibit better stability in running straight at a relatively high speed as compare with Example 1 tire and far better gripping properties in cornering (the points of gripping properties ascend from Example 2 tire to Example 4 tire in this order).

In the foregoing descriptions, the present invention is described with reference to the embodiments. However, the aforementioned embodiments represent mere examples and these embodiments can be implemented after being modified unless such a modification digresses from the scope of the present invention. Further, needless to say, the scope of rights of the present invention is not restricted to these embodiments.

## Claims

1. A pneumatic tire for a motorcycle, comprising:
a carcass constituted of at least one carcass ply provided in a toroidal shape over a pair of bead cores;
a dual layer slant belt constituted of two cord-crossing layers in which cords of respective layers cross each other, the slant belt being disposed on the outer side in the tire radial direction of the carcass; and
a circumferential direction belt layer provided on the outer side in the tire radial direction of the slant belt layers and extending substantially in the tire circumferential direction,
wherein a first belt layer as the innermost belt layer in the tire radial direction of the slant belt layers is constituted of three divided portions including one row of a first belt layer center portion disposed at the center portion in the tire widthwise direction and two rows of first belt layer side portions disposed on respective side portions in the tire widthwise direction, and
cords of the first belt layer center portion are disposed at an angle in a range of 60 to 90 degrees with respect to the tire equatorial plane, and cords of the first belt layer side portions are disposed at an angle in a range of 20 to 50 degrees with respect to the tire equatorial plane.

2. The pneumatic tire for a motorcycle of claim 1, wherein rubbers of different types are disposed at the center portion and side portions of a tread, respectively, such that 300% modulus at 100 °C of the rubber at the center portion is higher than that of the rubber at the respective side portions of the tread.

3. The pneumatic tire for a motorcycle of claim 1 or 2, further comprising an outermost protection layer having substantially the same belt width as the slant belt layers, the outermost protection layer including an aramid cord extending at an angle in a range of 70° or greater with respect to the tire equatorial plane.

4. The pneumatic tire for a motorcycle of any of claims 1 to 3, wherein a second belt layer disposed on the tire radial direction outer side of the first belt layer, of the slant belt layers, is constituted of three divided portions including one row of a second belt layer center portion disposed at the center portion in the tire widthwise direction and two rows of second belt layer side portions disposed on the respective side portions in the tire widthwise direction,
cords of the second belt layer center portion are disposed at an angle in a range of 60 to 90 degrees with respect to the tire equatorial plane,
cords of the second belt layer side portions are disposed at an angle in a range of 20 to 50 degrees with respect to the tire equatorial plane, such that the cords of the respective portions of the second belt layer cross the cords of the first belt layer.
